# EUROPEAN PATENT APPLICATION

(11) **EP 1 772 310 A1**
(43) Date of publication of application: **11.04.2007**
(21) Application number: 05425695.3
(22) Date of filing: 06.10.2005
(51) Int. Cl.: B60P 3/22

(54) **Hopper structure**

(71) Applicant: Munzio, Vincenzo, 84043 Agropoli SA (IT)
(72) Inventor: Munzio, Vincenzo, 84043 Agropoli SA (IT)
(74) Representative: Iannone, Carlo Luigi

(57) **Abstract**

The present invention finds application in the transport sector, mainly in the transport of dry bulk powders (cement, sand, sugar, cereals, etc.), where the problem of the transportable payload reduction is particularly felt. Such payload is due to the tare/volume ratio, so the objective of the present invention is raising the volume of the transported good without altering the tare value. To get it some changes have been brought to the flange form of the discharge hoppers, to the cones (2) and to the discharge hoppers (3) by making them larger. So we got the required volume increasing without modifying the vehicle tare value and its overall dimensions.

## Description

The present invention refers to the construction of the discharge hoppers of the silo semi-trailers suitable to transport dry bulk powders (cement, sand, sugar, etc.).

Market researches proved that the empty weight reduction is not enough to improve the dry bulk powders transport. In the past the freight companies used to let the vehicles make a journey only with a load and come back unloaded to the factory, so their main purpose was just to raise the payload of each semi-trailer.

Nowadays the most conveyors load their vehicles with a different product during the return journey too in order to raise the transport system productivity. In view of that the payload is substituted by the transportable payload, whose value is due to the vehicle tare/volume ratio. Diversification is the new transport concept wherein the only variable to take in consideration is the transportable payload: as the tare/volume ratio drops, so the possibility to load different products increases, that means we have a very efficient combined cargo during both the go and return journeys.

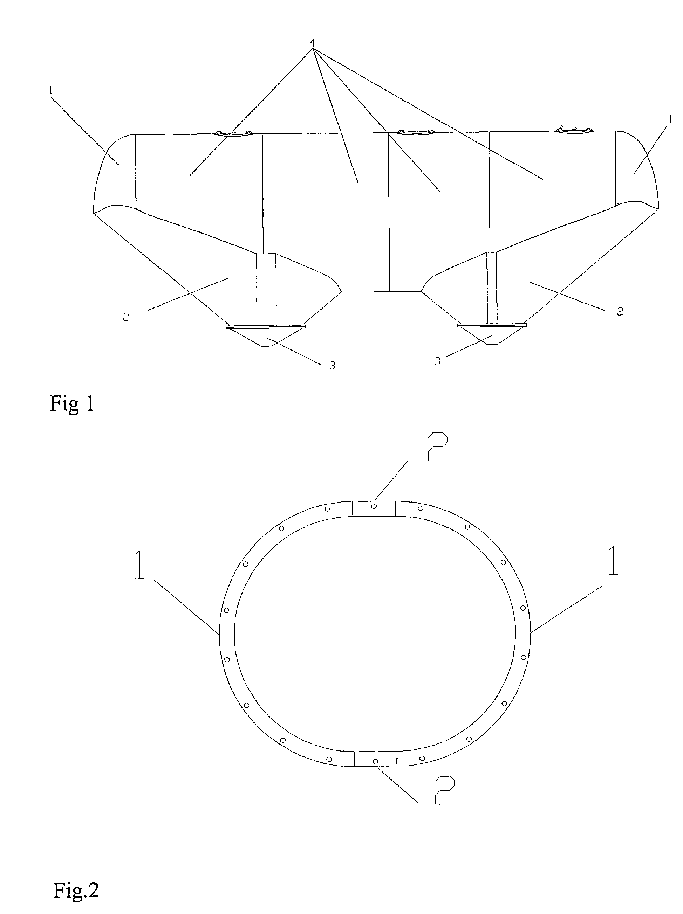

To get a lower tare/volume ratio it is necessary that the volume should be raised, but in the mean time the tare also could increase because of the container configuration: in fact, the container consists of no. 02 torispherical heads Fig.1, a cylindrical plating Fig. 1(1), cones Fig. 1(2) and discharge hoppers Fig. 1(3).

To increase the container volume it is necessary either to raise the number of the container cones or to raise the length or the diameter of the container cylindrical plating. In the first case it is possible to get only the tare raising, while in the second case the overall dimensions of the vehicle would increase, but with a reduction of its manoeuvrability.

The object of the present invention is increasing the container volume without modifying the empty weight and the overall dimensions (overall length and width) of the vehicle. To achieve that purpose new discharge hoppers flanges Fig. 2 of the container have been designed.

At the beginning the flanges had a circular form (due to the form of the cones base section Fig. 4), while the effect of this invention is the oval form of the flanges. Such an oval form has been realised by dividing the traditional flange circumference in two semi-circumferences Fig. 2 (1) and introducing rectilinear parts between them Fig. 2(1).

As a result the discharge hoppers have got a greater capacity and so not only one but two air inlets Fig. 3 (1) are necessary for each hopper to improve the fluidisation of the product with the consequential reduction of the discharge time. As the flanges have such a different shape, the form of the cones has been changed too Fig. 4: previously, they had a para-elliptical form, that means the base section was circular and the upper section was elliptical with a generator inclination of 30° on the transversal plane and 50° on the longitudinal plane. In view of the new flanges form, the above mentioned cones have been modified in its both sections, except for the transversal and longitudinal inclinations. The lower section form, Fig. 5 is not circular any more but similar to that one of the above mentioned flange, while the upper section consists of an arches array with a variable radius and no. 02 rectilinear parts Fig. 6. The introduction of no. 02 rectilinear parts in the flange form involves the presence of no. 02 plane walls Fig. 7 (3) on the whole cone (each one per side) Fig. 7. In conclusion it looks like half the cone had been moved inwards the container, so that the hollow space between the cones has been reduced (see the hatched area in the Fig. 8) and much more volume has been salvaged in such an unexploited zone.

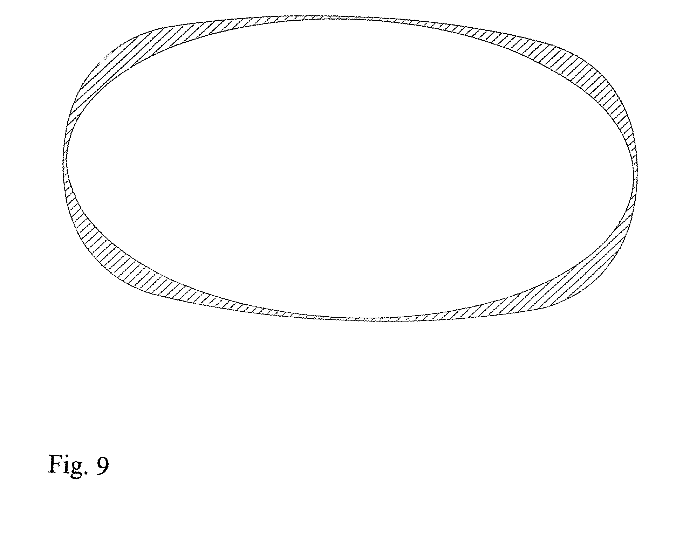

The modification of the upper section of the cones Fig. 6 has allowed the raising of the calendering radius, in fact it is possible to notice the raising of the area (see the hatched area in the Fig. 9) between the original elliptical form and that one used for the new cone design, as well as the consequential volume increasing.

So without modifying the vehicle overall dimensions this invention has provided great advantages such as the discharge time reduction, the raising of the tare/volume ratio, the consequential increasing of the payload and the volume due to:
- the presence of the plane section inside the cone,
- the greater calendering radius,
- the reduction of the hollow space between the cones.

Furthermore, the conveyor profit has to be considered like the community indirect benefit thanks to the reduction of the kilometres necessary for the transport of the same goods quantity.

The present invention will be better described by the enclosed drawings, in which:
- Fig. 1 is a schematic view of the container where it is possible to observe the several components of the semi-trailer, among them the container and the cones.
- Fig. 2 is a view of the flange

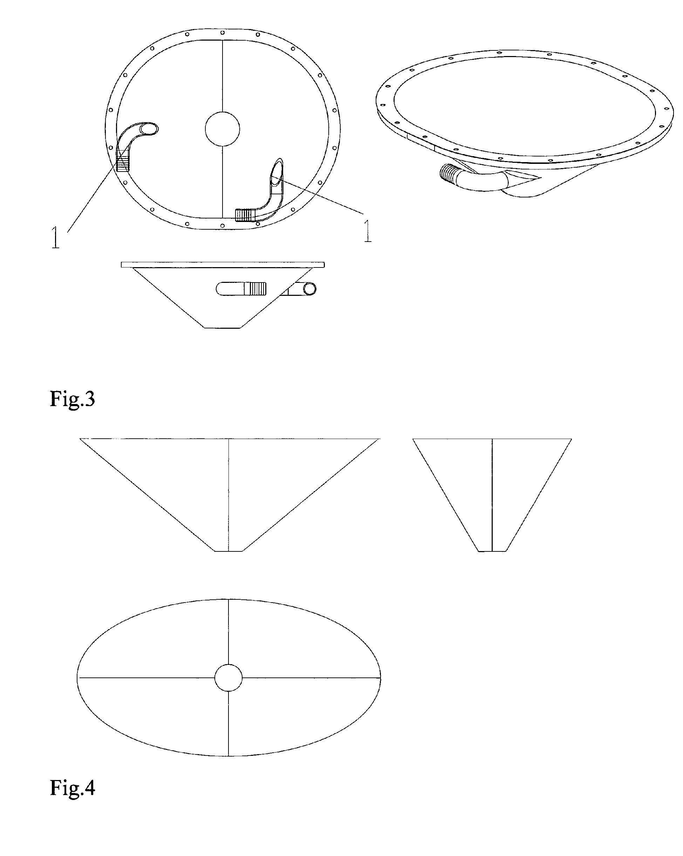

- Fig. 3 is an illustration of the discharge hopper
- Fig. 4 is an illustration of the three canonical views of the traditional cone

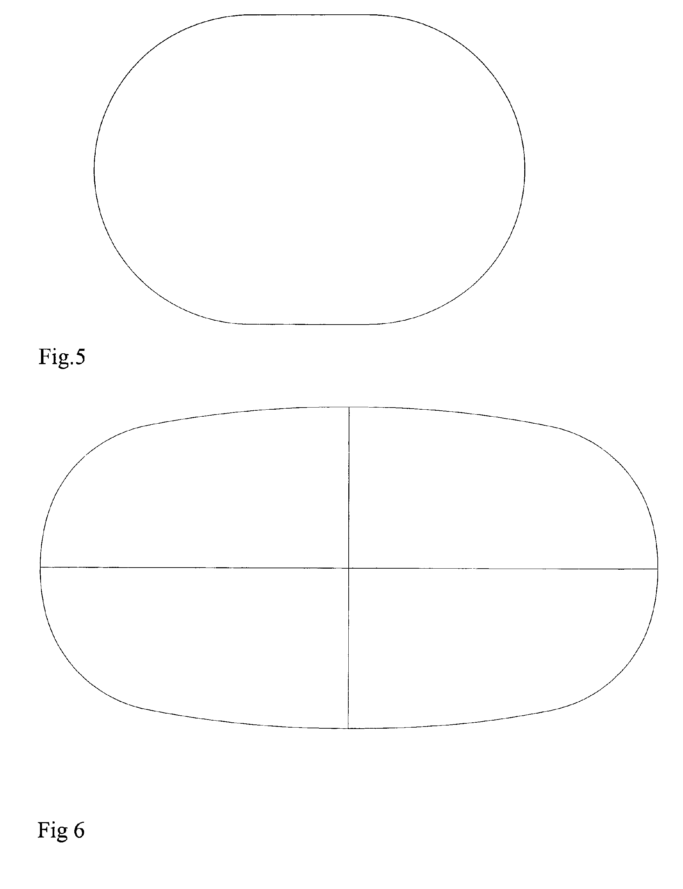

- Fig. 5 is a illustration of the lower section of the modified cone
- Fig. 6 is an illustration of the upper section of the modified cone

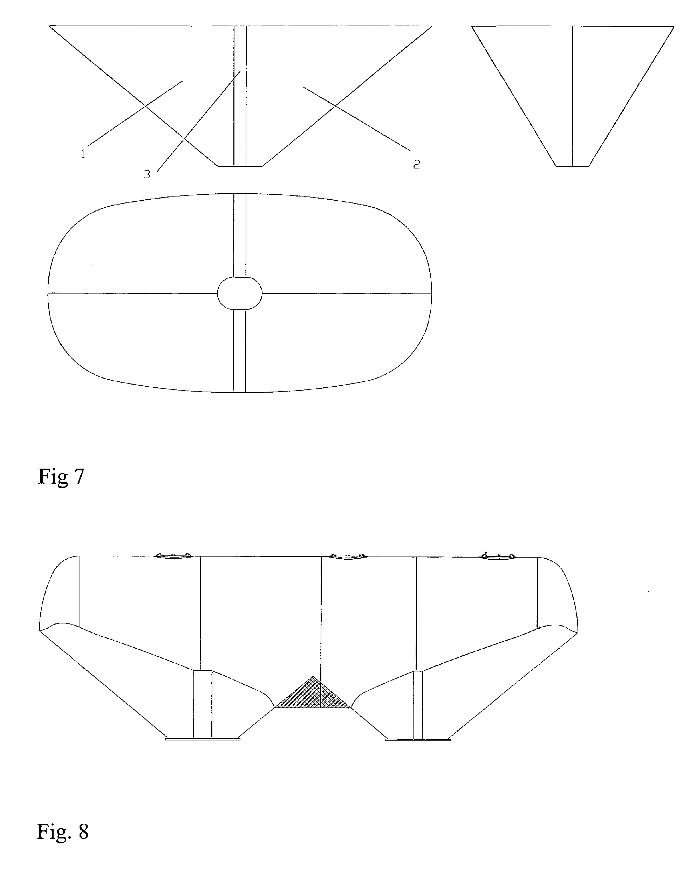

- Fig. 7 is an illustration of the three canonical views of the modified cone
- Fig. 8 is an illustration of the hollow space between the cones
- Fig. 9 is a comparison between the upper section of the modified cone and that one of the traditional cone.

With reference to the figures a preferred, but not limiting, configuration of this invention is shown. It will be obvious to the skilled people in the same sector, upon reading the present description, that numerous variations and modifications can be find to describe the realization of this particular flange, but if those are not suitable to modify the substantial form of the flanges and cones, they are part of the restrictions mentioned in the attached claims.

As the aluminium plating has been assembled with the heads, they will be put on a template where the flange will be put too. Such flange consists of rectangular extruded profiles and subdivided in no. 4 components, as follow:
- no. 02 semi-circumferences with the same radius Fig. 2 (1)
- no. 02 rectilinear sections Fig. 2 (2)

Then, the semi-cones Fig. 7 (1) and Fig. 7 (2) will be assembled with the plating, the head and the flange. First of all it will be put the internal semi-cone Fig. 7 (2), that is the array of a plane geometry and a conical one. The conical part is carried out by a plastic deformation process, called calendering, that allows the original plane sheet (representing the planned cone development) to take on the conical form with a generator inclination between 30° on the transversal plane and 50° on the longitudinal one.

In this case the calendering activity concerns just the central part of the sheet. At the end of the above mentioned process there are some non-calendered parts, so with a plane form. They are located at both the ends of the conical part and will be used as connection with the external semi-cone.

The external semi-cone has a conical geometry and is carried out by the same process used for the internal one, but this time the calendering activity concerns the whole sheet, so that there are no plane parts.

After having put the internal semi-cone, the external one will be assembled and welded to the cylindrical plating of the container, the flange and the internal semi-cone, previously assembled. This operation will be executed for all the no. cones forming the container.

The above mentioned flange will be assembled to a similar counter-flange where it will be welded a discharge hopper consisting of no. 02 components, carried out by the calendering of the relative developments.

The discharge hopper has a circular base section in order to let the discharge valves or other parts fit for the discharge system be assembled on it, while the upper section refers to the flange form, which it is welded on. Because of the dimensions of the discharge hopper two air inlets are necessary to facilitate the fluidisation of the product flowing inwards. Such inlets are fitted on the opposite sides of the hopper and with the directions opposite to each other Fig. 3, in order to avoid that the product inside the hopper can compact itself.

## Claims

1. The flange of the discharge hopper **characterised in that** it consists of rectangular extruded profiles and is subdivided in four components:
• No. 02 semi-circumferences with equal radius
• No.02 rectilinear sections
On the flange it will be assembled the discharge hopper, **characterised in that** the upper section is similar to the above mentioned flange and the lower section has a circular form. It leads to a volume raising of the product inside the hopper, so a particular air inlet system has been introduced to avoid that the product can compact itself: the air inlet system **characterised in that** the two inlets are located on the opposite sides of the hopper with the directions Fig. 3 (1) opposite to each other.

2. The cone **characterised in that** it consists of 3 parts:
i) external semi-cone
ii) internal semi-cone
iii) plane walls
The presence of the plane walls has been designed as a connection between the two semi-cones, in fact the internal semi-cone **characterised in that**, as regards the current technical condition it has been translated inwards, in order to increase the volume of the cone and to reduce the hollow space between the cones forming the container.

3. Because of the presence of the plane part, the upper section of the cone **characterised in that** it consists of an arches array with a variable radius and no. 02 rectilinear parts Fig. 6, while the lower section consists of no. 02 semi-circumferences with the same radius and connected by two segments Fig. 5.
